# FASCICULE DE BREVET EUROPEEN

(11) **EP 3 899 405 B1**
(45) Date de publication et mention de la délivrance du brevet: **07.06.2023**
(21) Numéro de dépôt: 19839347.2
(22) Date de dépôt: 02.12.2019
(51) Int. Cl.: F28F 9/00, F16J 15/02

(54) **DISPOSITIF D'ÉTANCHÉITÉ POUR ECHANGEUR DE CHALEUR DE VEHICULE AUTOMOBILE**
DICHTUNGSVORRICHTUNG FÜR EINEN KRAFTFAHRZEUGWÄRMETAUSCHER
SEALING DEVICE FOR A MOTOR VEHICLE HEAT EXCHANGER

(30) Priorité: 19.12.2018 FR 1873290
(43) Date de publication de la demande: 27.10.2021
(73) Titulaire: Valeo Systemes Thermiques, 78322 Le Mesnil Saint Denis Cedex (FR)
(72) Inventeur: TOURNOIS, Rémi, 78322 LE MESNIL SAINT-DENIS CEDEX (FR); BIREAU, Fabien, 78280 GUYANCOURT (FR); ANDRE, Stephan, 78322 LE MESNIL SAINT-DENIS CEDEX (FR); HENON, Emmanuel, 78322 LE MESNIL SAINT-DENIS CEDEX (FR)
(74) Mandataire: Valeo Systèmes Thermiques
(86) Numéro de dépôt international: PCT/FR2019/052885
(87) Numéro de publication internationale: WO 2020/128195

(56) Documents cités:
- WO-A1-2005/088225
- GB-A- 2 373 571
- US-A1- 2018 195 431

## Description

Le domaine de la présente invention est celui des dispositifs d'étanchéité et plus particulièrement des dispositifs d'étanchéité destinés aux systèmes d'échange de chaleur de véhicules automobiles, notamment de véhicules hybrides ou électriques. GB 2 373571 A divulgue un dispositif d'étanchéité selon le préambule de la revendication 1.

Il est connu de prévoir dans les véhicules automobiles différents circuits de fluide réfrigérant ou caloporteur, afin de réaliser le refroidissement de différents composants du véhicule et notamment le moteur ou les batteries, et/ou pour former un circuit de refroidissement d'un système de chauffage, de climatisation et/ou de ventilation. Ces différents circuits de fluide sont amenés à traverser un ou plusieurs échangeurs de chaleur équipant le véhicule notamment en face avant du véhicule, de sorte que le fluide circulant dans l'échangeur puisse réaliser un échange thermique avec un flux d'air entrant par la face avant du véhicule.

De tels systèmes sont mis en oeuvre aussi bien pour des véhicules à moteur thermique que pour des véhicules électriques ou hybrides. Dans les véhicules électriques ou hybrides, les moyens de motorisation électriques actuels font appel à des batteries de plus en plus puissantes pour améliorer les performances motrices et de confort du véhicule, tout en augmentant l'autonomie du véhicule. L'augmentation de la puissance des batteries doit s'accompagner de recherches sur des moyens de recharge rapide. On connaît des bornes de recharge rapide mettant en oeuvre des puissances électriques supérieures à 50 kW. De telles puissances s'accompagnent néanmoins d'une dissipation thermique dans la batterie du véhicule, qui, si elle n'est pas évacuée, peut y provoquer des dommages irréversibles tels qu'une réduction de sa durée de vie ou une limitation de sa vitesse de charge.

Afin de prévenir de tels dommages, il est nécessaire de thermoréguler les batteries, et notamment de les refroidir. Dans ce but, les véhicules automobiles sont classiquement équipés de systèmes d'échange de chaleur capables de transférer des calories d'un fluide à un autre. Un conduit de ventilation permet de guider l'air entrant, froid, vers un ou des échangeurs de chaleur, lesquels peuvent être agencées dans un boitier d'encapsulage hermétiquement clos encapsulant aussi un groupe moto ventilateur.

Dans les conditions particulières de charge rapide, le véhicule est à l'arrêt. Afin d'assurer un débit d'air suffisant pour permettre le refroidissement optimal de la batterie, le groupe moto ventilateur fonctionne à des vitesses élevées, générant de ce fait une forte surpression au sein du boitier. Une telle surpression est susceptible de provoquer d'une part la fuite d'air frais, c'est-à-dire le passage d'air à l'extérieur du boîtier sans passer par le ou les échangeurs, et le cas échéant une recirculation d'air chaud provenant de l'extérieur du boitier, ce qui a pour effet dans les deux cas de réduire les performances thermiques du module de face avant. L'étanchéité du boitier d'encapsulage devient donc primordiale, en particulier au niveau des composants traversant le boitier, tels que les tubulures d'entrée et de sortie de l'échangeur de chaleur, qui constituent des zones de faiblesse pouvant être à l'origine de fuites d'air.

Pour remédier à cet inconvénient, des dispositifs d'étanchéité peuvent être mis en oeuvre dans le boitier d'encapsulage, au niveau des zones de passages de tubulures à travers le boîtier. Il convient de noter qu'une telle problématique ne se limite pas aux véhicules électriques et hybrides, les circuits de fluides caloporteurs tels que précédemment décrit pouvant également être intégrés au sein des systèmes de ventilation, chauffage ou climatisation des véhicules à moteur thermique. Les dispositifs connus présentent cependant de nombreux désavantages. De par la variabilité des diamètres et types de tubulures composant les systèmes d'échange de chaleur, ces dispositifs d'étanchéité sont bien souvent difficilement adaptables et doivent être réalisés à des dimensions spécifiques afin d'assurer une étanchéité optimale au niveau des tubulures de calibres variables auxquelles ils sont destinés. Un tel inconvénient entraine une augmentation des coûts de production, due à la multiplicité des pièces d'étanchéité de modèles différents requis, mais aussi une difficulté d'approvisionnement lorsque le remplacement du dispositif vient à être nécessaire.

De plus, de tels facteurs peuvent interférer avec les performances du dispositif d'étanchéité. Par exemple, l'utilisation de dispositifs d'étanchéité destinés à des tubulures de diamètre défini sur des tubulures de diamètre proche mais non identique ne sera pas optimale et ne préviendra pas la recirculation des flux d'air chaud et/ou la fuite d'air frais. A l'inverse, l'insertion de tubulures de diamètre légèrement supérieur dans un dispositif d'étanchéité trop étroit pourra créer des contraintes physiques sur le dispositif d'étanchéité, accélérant de ce fait son usure et réduisant sa durée de vie.

Un autre inconvénient présent dans les dispositifs d'étanchéité connus est leur complexité d'assemblage et de désassemblage. Nombre de ces dispositifs sont fixés de façon permanente, notamment lorsqu'ils requièrent des opérations de surmoulage visant à assurer la fixation étanche des tubulures au niveau de leur passage à travers le boitier d'encapsulage. Une telle opération rend d'une part l'assemblage complexe, mais aussi tout désassemblage ultérieur éventuel, pour entretien ou réparation, plus fastidieux.

La présente invention s'inscrit dans ce contexte et a pour but de proposer un dispositif d'étanchéité durable pour échangeur de chaleur, pouvant être aisément adapté aux différents diamètres des tubulures d'un module de face avant, et étant facilement produit.

Un autre but de l'invention est de fournir un procédé d'assemblage simple du module de face avant, notamment parce qu'il ne nécessite pas d'opération supplémentaire de fixation, telle que du surmoulage, et qui permette également de faciliter d'éventuels désassemblages ultérieurs, tout en conservant une étanchéité optimale du boitier d'encapsulage de l'échangeur de chaleur.

L'objet de la présente invention concerne ainsi un dispositif d'étanchéité pour échangeur de chaleur de véhicule automobile consistant en une plaque comprenant un évidement central configuré pour laisser passage à une tubulure de l'échangeur de chaleur, caractérisé en ce qu'au moins deux bords d'extrémité opposés de ladite plaque sont équipés respectivement d'un moyen de fixation par encliquetage, apte à coopérer respectivement avec des éléments complémentaires de fixation par encliquetage intégrés dans un logement situé dans un cadre de support de l'échangeur de chaleur, et caractérisé en ce que le dispositif d'étanchéité comporte un moyen d'étanchéité déformable élastiquement, agencé autour de l'évidement central formé dans la plaque.

On entend par fixation par encliquetage une fixation impliquant d'une part une saillie de matière, formant un élément mâle, et d'autre part une entaille ou fente, formant un élément femelle, la saillie étant de forme complémentaire à la coche, de sorte qu'elle puisse y être inséré, cette insertion se faisant par déformation élastique de l'un et/ou l'autre des éléments mâle et femelle.

En vue de la coopération entre le dispositif d'étanchéité et le logement, ledit logement est intégré dans le cadre de support de l'échangeur de chaleur, au niveau de la zone de passage d'une tubulure d'échangeur de chaleur à travers la paroi du cadre de support, et est de forme complémentaire à celle du dispositif d'étanchéité. Selon la forme adoptée par ledit dispositif, le logement peut être encadré par des rainures, elles aussi aptes à coopérer avec le dispositif d'étanchéité.

Ce logement peut donc être agencé selon différentes alternatives, que ce soit de forme, ou d'emplacement. Ainsi, comme précédemment exposé, il peut être intégré dans l'une des parois du cadre de support, et donc fermé sur chaque côté ou, alternativement, être agencé de sorte qu'un des côtés du logement se situe à une extrémité de la paroi du cadre de support, laissant le logement ouvert sur un côté. Enfin, le logement pourra être disposé au niveau de la zone de contact existant entre le cadre de support et un conduit de ventilation, venant se fixer sur ledit cadre de support, étant entendu que dans un tel exemple, le logement est partiellement intégré dans le cadre de support et partiellement intégré dans le conduit de ventilation.

Le dispositif d'étanchéité et l'ensemble formé par le logement et les rainures coopèrent ainsi de manière à permettre une insertion simplifiée du dispositif dans le module de face avant. De plus, l'assemblage du module de face avant dans sa globalité en est simplifié, puisque l'échangeur de chaleur peut au préalable être placé dans son cadre de support, de sorte qu'une ou plusieurs de ses tubulure(s) traversent ledit cadre au niveau de zones de passage définies, le conduit de ventilation peut être fixé sur le cadre de support, et le dispositif d'étanchéité peut être inséré à tout moment, suivant l'installation de l'échangeur de chaleur, dans le module de face avant, que ce soit avant ou après la fixation du conduit de ventilation.

Aucune opération supplémentaire de fixation n'est requise une fois le dispositif d'étanchéité installé dans son logement, et toute manoeuvre de manutention future se fera sans complexité puisque le dispositif peut aisément être extrait. Pour cela il suffit de retirer le conduit de ventilation, puis d'exercer une pression suffisante sur l'une des faces du dispositif d'étanchéité, avantageusement la face orientée vers l'intérieur du module de face avant, de manière à désolidariser les moyens de fixation par encliquetage et ainsi déloger le dispositif d'étanchéité.

La présence d'un moyen d'étanchéité déformable élastiquement agencé autour de l'évidement central formé dans la plaque donne au dispositif la capacité de s'adapter à des tubulures de calibre variables tout en assurant une étanchéité optimale. Par déformable élastiquement, on entend que le moyen d'étanchéité est réalisé dans un matériau souple, apte à subir une déformation des suites de l'exercice d'une contrainte physique telle que l'insertion d'une tubulure dans ledit évidement, et apte à être rappelé en position par un effort de rappel élastique pour se plaquer sur le contour de la tubulure.

Selon un premier mode de réalisation de la présente invention, le moyen d'étanchéité déformable élastiquement peut comporter une gaine d'étanchéité souple, surmoulée sur la plaque autour de l'évidement central, et pourvue d'une pluralité de zones de prédécoupe. La gaine est initialement dans un état non perforé, standard, et au moment de l'assemblage du module de face avant, il est possible de percer, sans efforts considérables, un orifice de diamètre adapté au calibre de la tubulure désirée dans la gaine d'étanchéité. Alternativement, la perforation de la gaine pourra s'effectuer par déchirure, lorsque la tubulure vient à être insérée directement sur la gaine d'étanchéité non perforée. Un tel moyen d'étanchéité assure la standardisation du dispositif d'étanchéité, qui est ainsi adapté à une large gamme de tubulures.

D'une part les zones de prédécoupes permettent de définir des zones de découpes, selon des diamètres spécifiques, plus ou moins égaux au diamètre désiré. D'autre part l'élasticité du matériau formant la gaine garantit l'étanchéité de la zone de passage de la tubulure, puisque le matériau en épouse la forme. La standardisation du dispositif d'étanchéité contribue ainsi à réduire les coûts de production tout en simplifiant l'assemblage du module de face avant. Avantageusement, on assure aussi la facilitation de l'insertion de la tubulure, tout en évitant la concentration de contraintes, que ce soit sur le dispositif d'étanchéité ou les tubulures.

Selon une caractéristique de l'invention, la gaine d'étanchéité souple peut comporter plusieurs plateaux disposés en série les uns sur les autres, lesdits plateaux étant rangés par diamètre décroissant depuis la plaque, chaque plateau formant une zone de prédécoupe pour le passage d'une tubulure de diamètre correspondant.

Selon une caractéristique de l'invention, au moins la gaine d'étanchéité peut être réalisée en caoutchouc de type EPDM (éthylène-propylène-diène monomère).

Selon un second mode de réalisation, présentant des avantages similaires, le moyen d'étanchéité déformable élastiquement est formé d'un seul tenant sur la plaque du dispositif d'étanchéité par au moins deux encoches issues de l'évidement central, ces encoches délimitant des languettes déformables. En d'autres termes, le moyen d'étanchéité déformable élastiquement est formé par des languettes déformables agencées dans le plan d'allongement de la plaque, lesdites languettes déformables étant formées autour de l'évidement central par l'intermédiaire d'au moins deux encoches débouchant dans cet évidement central. Par languette déformables on entend des zones faites d'un matériau souple, de forme sensiblement rectangulaire ou trapézoïdale dont deux côtés sont définis par lesdites encoches, pouvant être déformées ou déplacées par le simple exercice d'une contrainte physique, tel que l'insertion d'une tubulure, de manière à s'adapter à différents calibres de tubulures.

Le procédé d'assemblage du système d'échangeur de chaleur en est alors simplifié à son maximum puisque le dispositif d'étanchéité ne nécessite aucune préparation préalable, telle qu'une étape de découpe à un diamètre spécifique, en vue de l'insertion de la tubulure. La présence des languettes déformables assure l'adaptabilité du dispositif d'étanchéité face à différents calibres de tubulure tout en s'assurant que l'étanchéité du système est préservée, puisque, de par la souplesse de la zone centrale, chaque languette épouse la forme de la tubulure traversante.

On comprend ainsi que ces deux modes de réalisation permettent d'adapter le dispositif d'étanchéité à différents types de tubulures tout en limitant la variété de pièces compatibles nécessaires pour assurer la bonne étanchéité du module de face avant.

De façon similaire, la forme de la plaque, telle que décrite ou présentée dans les figures n'est en rien limitative. Ainsi la plaque pourra adopter une forme sensiblement rectangulaire, ou encore, dans le cas du premier mode de réalisation, suivre le contour de la gaine d'étanchéité sur l'un de ses bords.

Dans chacun des modes de réalisation, ces dispositifs d'étanchéité pourront être réalisés de sorte qu'il existe une différence de matériaux, et donc de rigidité, entre les moyens de fixation par encliquetage d'une part, et les moyens d'étanchéité agencés au niveau de l'évidement central de l'autre. Par exemple les moyens de fixation par encliquetage pourront être réalisés dans un matériau rigide, tel que du polypropylène (PP) ou du polyamide (PA), tandis que les moyens d'étanchéité seront réalisés en matériaux plus souples, tel qu'un caoutchouc de type EPDM.

La forme de la plaque, telle que décrite ou représentée par la suite, n'est en revanche en rien limitative, ainsi elle pourra adopter une forme sensiblement rectangulaire, ou encore, comprendre des bords plus arrondis.

Tel que cela été évoqué précédemment, le dispositif d'étanchéité comporte, outre le moyen d'étanchéité déformable élastiquement, au moins deux moyens de fixation par encliquetage, respectivement disposés sur des bords d'extrémité opposés de la plaque et aptes chacun à coopérer avec des éléments de fixation complémentaires intégrés dans le cadre de support de l'échangeur de chaleur.

Selon une caractéristique de l'invention, les moyens de fixation par encliquetage peuvent être agencés sur la face du dispositif d'étanchéité qui sera orientée vers l'intérieur du module de face avant une fois le dispositif d'étanchéité intégré dans le système. Dans une telle configuration, les moyens de fixation s'étendent perpendiculairement au plan défini par la plaque, sur une longueur inférieure à la longueur de la plaque.

Selon une autre caractéristique de l'invention, les moyens de fixation par encliquetage sont disposés respectivement sur une paroi agencée au voisinage d'un bord d'extrémité et qui est sensiblement perpendiculaire au plan dans lequel s'étendent la plaque et l'évidement central, les moyens de fixation par encliquetage s'étendent, selon un plan parallèle au plan dans lequel s'étendent la plaque et l'évidement central, sur une longueur inférieure à la longueur du bord d'extrémité correspondant de ladite plaque. Les moyens de fixation selon la présente configuration s'étendent sur une longueur inférieure à la longueur du bord latéral de ladite plaque. Les moyens de fixation par encliquetage peuvent être disposés au niveau des parois latérales, plus particulièrement sur la face orientée vers l'extérieur de la pièce de ladite paroi latérale.

Selon une caractéristique de l'invention, la plaque est encadrée par une zone périphérique décalée axialement et formant une plate-forme, la plaque et la zone périphérique étant reliées par des parois latérales. On comprend que l'axe selon lequel la plaque et la zone périphérique sont décalées est l'axe perpendiculaire au plan dans lequel s'étendent la plaque et l'évidement central. La plaque et la zone périphérique sont reliées par des parois latérales pouvant s'étendre dans un plan orthogonal à celui de la plaque.

Selon une caractéristique de l'invention, la zone périphérique s'étend dans un plan parallèle au plan dans lequel s'étend la plaque et l'évidement central, et dans lequel l'extrémité de la zone périphérique opposée aux parois latérales est équipée d'un pan de matière, orthogonal au plan de ladite zone périphérique, formant une paroi de renvoi agencée de manière telle que les parois de renvoi, la zone périphérique et les parois latérales forment une zone de dégagement hébergeant les moyens de fixation par encliquetage. Cette zone de dégagement renforce l'étanchéité du système au niveau des moyens de fixation, agissant comme un obstacle pour toute fuite d'air. La zone de dégagement, en forme de gouttière, peut par exemple adopter un profil en U ou en J, dimensionné pour héberger les moyens de fixation par encliquetage.

Lorsque le dispositif d'étanchéité comprend de tels parois de renvoi, le logement de forme complémentaire sera aussi équipé d'au moins deux rainures, aptes à accueillir les parois de renvoi, lesdites rainures s'étendant parallèlement au logement sur une longueur supérieure à la longueur du logement, de manière à l'encadrer.

Les parois de renvoi contribuent ainsi au verrouillage du dispositif d'étanchéité en faisant butée contre des rainures de forme complémentaire les accueillant, de manière à prévenir tout mouvement au sein du logement. De par leur agencement, la zone périphérique, les parois latérales, et les parois de renvoi, formant la zone de dégagement, créent une barrière supplémentaire au niveau des moyens de fixation par encliquetage, renforçant ainsi leur étanchéité.

Selon une caractéristique de l'invention, les moyens de fixation par encliquetage sont disposés au niveau des parois de renvoi, sur une face orientée vers la paroi latérale, de sorte que les moyens de fixation par encliquetage s'étendent dans la zone de dégagement.

Il est à noter que pour chaque mode de réalisation et configuration présenté, les moyens et éléments complémentaires de fixation par encliquetage adoptent soit la structure d'un élément en saillie, mâle, soit celle d'un élément formant une fente, femelle, apte à coopérer avec ladite saillie, l'un et/ou l'autre étant déformable élastiquement pour faciliter cet encliquetage. L'un de ces éléments est disposé au sein du dispositif d'étanchéité, tandis que l'élément complémentaire est disposé au sein du cadre de support de l'échangeur de chaleur, dans le logement ou les rainures qui l'encadrent, selon la configuration considérée pour les moyens de fixation. Ainsi, et selon une caractéristique de la présente invention, l'élément en saillie, mâle, pourra être intégré dans le dispositif d'étanchéité, tandis que les fentes complémentaires, femelles, sont intégrées dans le cadre de support, ou inversement. Une telle fixation contribue à la simplification de l'assemblage du module de face avant et confère au dispositif d'étanchéité un caractère amovible avantageux pour toute opération de manutention.

Les moyens d'encliquetage sont configurés pour que l'élément mâle vienne se loger dans l'élément femelle par déformation élastique de l'un et ou l'autre, et de telle sorte qu'au moins un de ces éléments mâle et femelle comportent un renflement formant butée au dégagement de ces éléments l'un par rapport à l'autre.

La présente invention concerne également un module de face avant comprenant au moins un échangeur de chaleur muni d'une ou plusieurs tubulure(s), un cadre de support de l'échangeur, au moins un conduit de ventilation configuré pour coopérer avec ledit cadre, au moins un dispositif d'étanchéité selon l'un des modes de réalisation de la présente invention et un logement de forme complémentaire associé, équipé de moyens de fixation par encliquetage, appelés éléments complémentaires de fixation, aptes à coopérer avec des moyens de fixation par encliquetage présents dans le dispositif d'étanchéité, ledit logement pouvant être intégré dans le cadre de support ou dans l'ensemble formé par le cadre de support et le conduit de ventilation, lorsque ceux-ci sont assemblés de manière à adopter une configuration dite « fermée ». Selon la forme adoptée par le dispositif d'étanchéité de la présente invention, le logement de forme complémentaire pourra aussi être encadré par au moins deux rainures, aptes à accueillir les parois de renvoi du dispositif d'étanchéité, lesdites rainures s'étendant parallèlement au logement sur une longueur supérieure à la longueur du logement.

Par configuration fermée on entend que le conduit de ventilation vient se fixer sur le cadre de support, de sorte que la face arrière du conduit de ventilation est au contact de la face d'extrémité frontale du cadre de support de l'échangeur, de manière à enfermer le ou les échangeur(s) de chaleur dans un semblant de boitier d'encapsulage. Le conduit de ventilation, ouvert vers l'avant du véhicule au niveau d'une gorge d'entrée pouvant être équipée de grilles, dirige ainsi l'air entrant, frais, vers la face arrière du conduit de ventilation et donc vers les échangeurs de chaleur, lorsque le conduit est fixé au cadre de support.

Lorsque l'échangeur de chaleur est placé dans le cadre de support ses tubulures entrante(s) et sortante(s) sont amenées à traverser une paroi du cadre de support. Le logement de forme complémentaire, destiné à accueillir le dispositif d'étanchéité, se situe au niveau de la zone de passage de ces tubulures d'entrée ou de sortie de fluides de l'échangeur de chaleur dans le cadre de support.

Ledit logement peut être agencé de manière à être entièrement disposé dans le cadre de support, tous ses côtés étant fermés ou bien il peut, alternativement, présenter un côté ouvert dans la continuité de la paroi latérale du cadre de support. Particulièrement le logement pourra s'étendre à la fois dans le cadre de support et le conduit de ventilation.

Dans le cas de cette alternative, il convient que la tranche du conduit de ventilation qui vient se fixer sur le cadre de support présente une cavité apte à accueillir au moins une partie du dispositif d'étanchéité. De même, lorsque le logement est ouvert et qu'il y a contact entre au moins un bord latéral du dispositif d'étanchéité et le conduit de ventilation, ledit conduit participe au verrouillage du dispositif d'étanchéité au sein du logement, le module de face avant est agencé de manière à ce que le bord latéral du dispositif d'étanchéité situé au niveau de l'ouverture du logement d'accueil, soit en appui sur la tranche du conduit de ventilation venant se fixer sur le cadre de support.

Selon différentes caractéristiques de l'invention, prises seules ou en combinaison, on pourra prévoir que :

le module de face avant pour véhicule automobile comprend au moins un échangeur de chaleur muni d'une ou plusieurs tubulures, un cadre de support configuré pour permettre la fixation de l'échangeur de chaleur, un conduit de ventilation configuré pour coopérer avec une face d'extrémité frontale dudit cadre de support et configuré pour guider de l'air vers l'échangeur de chaleur, et au moins un dispositif d'étanchéité tel que précédemment décrit, le module de face avant comprenant en outre un logement formé dans une paroi du cadre de support au niveau des zones de passage de la tubulure d'entrée ou de sortie de fluide de l'échangeur de chaleur, ledit logement présentant une forme et des dimensions au moins en partie complémentaires à celles du dispositif d'étanchéité, le logement étant équipé d'éléments complémentaires de fixation par encliquetage aptes à coopérer avec les moyens de fixation par encliquetage présents dans le dispositif d'étanchéité.

le logement de forme complémentaire est fermé sur l'ensemble de ses côtés, de manière telle qu'aucun des côtés du dispositif d'étanchéité n'est en contact avec le conduit de ventilation lorsque celui-ci est fixé au cadre de support.

le logement étant encadré par au moins deux rainures, aptes à accueillir les parois de renvoi du dispositif d'étanchéité, lesdites rainures s'étendant parallèlement au logement sur une longueur supérieure à la longueur du logement.

L'invention concerne également un procédé d'assemblage d'un module de face avant pour véhicule automobile équipé d'un dispositif d'étanchéité tel que précédemment décrit, le procédé comprenant une première étape d'introduction de l'échangeur de chaleur dans le cadre de support, une deuxième étape de fixation du dispositif d'étanchéité, par insertion sur la tubulure de l'échangeur de chaleur jusqu'à ce que le dispositif d'étanchéité soit placé dans le logement complémentaire et une troisième étape de verrouillage du module de face avant par fixation du conduit de ventilation sur le cadre de support.

D'autres caractéristiques, détails et avantages de l'invention ressortiront plus clairement à la lecture de la description détaillée donnée ci-après, et de plusieurs exemples de réalisation donnés à titre indicatif et non limitatif en référence aux dessins schématiques annexés d'autre part, sur lesquels :
la [Figure 1] est une vue en perspective schématique d'un module de face avant selon un aspect de l'invention, en configuration fermée, dans laquelle un conduit de ventilation est fixé sur un cadre de support logeant au moins un échangeur de chaleur (ici non visible), la [Figure 1] illustrant, pour le besoin de la représentation et de manière non limitative, deux modes de réalisation différents d'un dispositif d'étanchéité conforme à l'invention ;
la [Figure 2] est une vue en perspective schématique du module de face avant présenté dans la [Figure 1], lorsqu'il est en configuration ouverte, avec le conduit de ventilation retiré de manière à dégager l'intérieur du cadre de support et rendre accessibles le ou les échangeur(s) de chaleur qui y sont logés ;
la [Figure 3] est une représentation schématique d'une coupe latérale du dispositif d'étanchéité de la présente invention, réalisé selon un premier mode de réalisation ;
la [Figure 4] est une représentation schématique d'une coupe latérale du dispositif d'étanchéité de la présente invention, réalisé selon un deuxième mode de réalisation ;
la [Figure 5] est une représentation schématique d'une coupe latérale du dispositif d'étanchéité de la présente invention, réalisé selon un troisième mode de réalisation ;
la [Figure 6] est une vue en perspective du dispositif d'étanchéité de la présente invention, réalisé selon le troisième mode de réalisation, vue depuis l'arrière du dispositif ;
la [Figure 7] est une vue en perspective du dispositif d'étanchéité de la [Figure 6], vue depuis l'avant du dispositif ;
la [Figure 8] est une vue en perspective, selon un angle similaire à celui de la [Figure 7], du dispositif d'étanchéité de la présente invention, lorsque celui-ci comprend un second type de moyen d'étanchéité ;
la [Figure 9] est une représentation schématique du logement et des rainures, disposés dans le cadre de support, et aptes à coopérer avec le dispositif d'étanchéité de la présente invention, selon le troisième mode de réalisation ;
la [Figure 10] illustre schématiquement la coopération entre le dispositif d'étanchéité de la [Figure 7] et le logement complémentaire associé de la [Figure 9] ;
la [Figure 11] illustre schématiquement une coopération similaire à celle de la [Figure 10] selon une variante de réalisation dans laquelle le logement est ouvert sur un côté.

Un module de face avant 100 selon la présente invention comporte au moins un échangeur de chaleur 4 muni d'une ou plusieurs tubulures 17a, 17b, un cadre de support 1 de l'échangeur de chaleur 4, au moins un conduit de ventilation 2 configuré pour coopérer avec ledit cadre et guider de l'air frais en direction de ce cadre et pour forcer à traverser l'échangeur de chaleur, au moins un dispositif d'étanchéité 3 agencé autour d'une tubulure au niveau d'une zone de passage de la tubulure à travers une paroi du cadre de support et un logement associé 10 de forme complémentaire à celle du dispositif d'étanchéité 3, le logement 10 pouvant être formé dans le cadre de support 1 ou dans l'ensemble formé par le cadre de support 1 et le conduit de ventilation 2, correspondant à un conduit d'écoulement d'un flux d'air, lorsque ceux-ci sont assemblés de manière à adopter une configuration dite « fermée », formant ainsi un boitier d'encapsulage. Le cadre de support 1, aussi appelé un cadre porteur, correspond à une structure rigide, plus précisément un cadre rigide en plastique avec quatre montants délimitant une surface dans laquelle sont agencés l'échangeur de chaleur 4 et éventuellement un groupe moto-ventilateur. Afin de garantir la continuité du conduit d'écoulement 2, ledit conduit de ventilation 2 est fixé de manière étanche au cadre de support 4. Autrement dit le cadre porteur assure la continuité du conduit de ventilation 2, ou en d'autres termes, le cadre porteur correspond à une partie du conduit d'écoulement 2

Dans ce qui va suivre, et tel que cela est représenté sur les trièdres présents sur les figures, on définira un axe longitudinal L comme un axe parallèle au sens de circulation principal du flux d'air à travers le cadre de support et chaque échangeur thermique, et on définira les orientations latérales Lt et transversales T comme des orientations perpendiculaires à l'axe longitudinal.

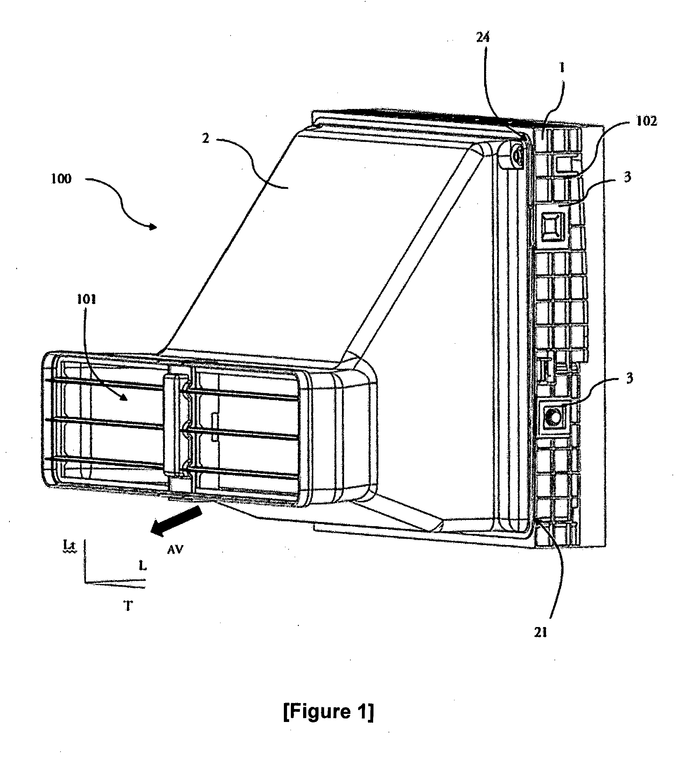

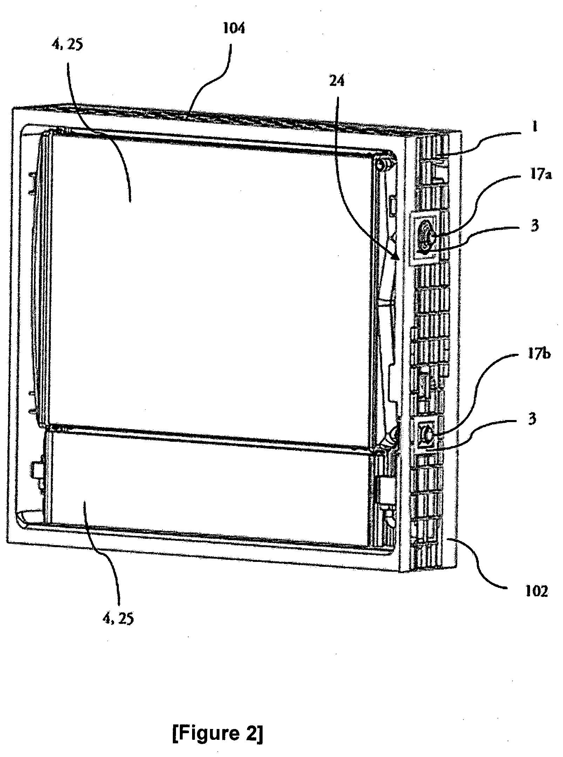

Un tel système 100 est notamment représenté, de façon schématique, sur les [Figure 1] et [Figure 2], respectivement en configuration fermée et ouverte. Le ou les échangeur(s) de chaleur 4 sont logés dans le cadre de support 1, lequel est configuré afin de permettre la fixation du conduit de ventilation 2.

Le conduit de ventilation 2 présente une bouche d'aération 101 ouverte sur la face avant du véhicule automobile, permettant ainsi l'entrée de flux d'air frais qu'il redirige dans l'encapsulage, vers l'échangeur de chaleur 4. Ce conduit de ventilation présente à une extrémité opposée à la bouche d'aération une face d'extrémité arrière, amenée à être en contact, dans la configuration fermée illustrée sur la [Figure 1], avec le cadre de support 1.

Le cadre de support 1 comporte deux parois latérales 102 et deux parois transversales 104, qui définisse un cadre ouvert permettant de loger entre les parois un ou plusieurs échangeurs de chaleur 4. On définit une face d'extrémité frontale 24 du cadre de support comme étant la face destinée à être en contact avec le conduit de ventilation 2, et plus particulièrement avec la face d'extrémité arrière de ce conduit de ventilation. C'est par cette face d'extrémité frontale 24 que, dans l'exemple illustré, l'air frais est amené à entrer dans le cadre pour traverser les échangeurs.

Chaque échangeur de chaleur comporte une surface d'échange 25 et au moins une boîte collectrice disposée latéralement par rapport à cette surface d'échange, ainsi qu'au moins une tubulure entrante 17a et sortante 17b issue de la boite collectrice et assurant la circulation d'un fluide réfrigérant. Le fluide réfrigérant est amené à échanger des calories avec l'air traversant la surface d'échange.

Les tubulures 17a, 17b s'étendent en saillie de la boite collectrice de l'échangeur, sensiblement dans le plan d'allongement principal de l'échangeur, c'est-à-dire perpendiculairement aux parois latérales définissant le cadre. Il en résulte que les tubulures, permettant le raccordement de l'échangeur à un circuit de fluide réfrigérant ici non représenté, sont disposées de manière à traverser le cadre de support 1 au niveau de zones de passages 26 définies lorsque l'échangeur est assemblé sur le cadre.

Afin d'assurer l'étanchéité de l'encapsulage du module de face avant et ainsi prévenir toute fuite d'air frais, c'est-à-dire un passage d'air vers l'extérieur du boîtier sans passer par le ou les échangeurs de chaleur 4, ou toute recirculation d'air chaud depuis l'extérieur du boîtier vers l'intérieur de celui-ci, ce qui viendrait dans les deux cas à pénaliser les performances thermiques du module de face avant 100, le système est équipé d'au moins un dispositif d'étanchéité 3 au niveau des zones de passage 26 des tubulures entrante(s) 17a et sortante(s) 17b de chaque échangeur de chaleur 4 dans le cadre de support 1. Ce dispositif d'étanchéité 3 sera plus amplement détaillé dans la suite de la description.

Pour les besoins de la représentation, les [Figure 1] et [Figure 2] présentent deux des modes de réalisation du dispositif d'étanchéité 3 de la présente invention, lorsqu'ils sont intégrés dans un module de face avant adapté. L'invention n'est néanmoins nullement limitée à cet exemple d'utilisation, et, pour des raisons de coûts de production, un même mode de réalisation du dispositif d'étanchéité 3 pourra être mis en oeuvre au niveau des tubulures entrante 17a et sortante 17b de l'échangeur de chaleur 4.

Le dispositif d'étanchéité 3, objet de la présente invention, consiste en une plaque 5 laissant passage à une tubulure 17 d'échangeur de chaleur 4, ledit dispositif d'étanchéité 3 étant apte à coopérer avec un logement 10 situé dans le cadre de support 1 de l'échangeur de chaleur 4.

Le dispositif d'étanchéité 3 est caractérisé en ce qu'il comprend au moins deux moyens de fixation 8 par encliquetage, aptes à coopérer avec des éléments complémentaires de fixation 9 intégrés dans le cadre de support 1 de l'échangeur de chaleur 4, et en ce que le dispositif d'étanchéité 3 comporte un moyen d'étanchéité déformable élastiquement 6, 13, agencé au niveau d'un évidement central 12 formé dans la plaque 5.

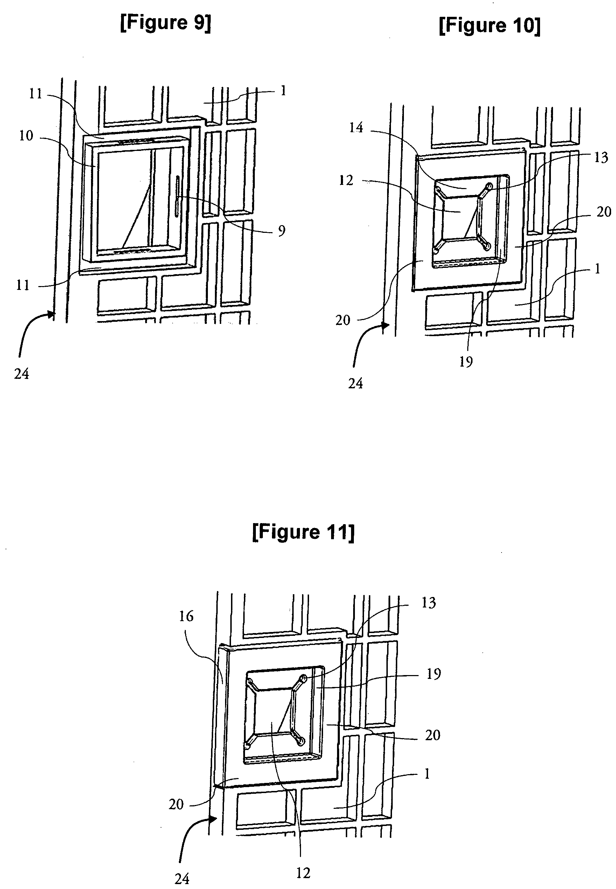

Ce dispositif d'étanchéité 3 est destiné à être inséré à l'intérieur du logement 10 tel qu'illustré dans la [Figure 10] ou [Figure 11], ledit logement 10 étant situé au niveau d'une zone de passage de tubulure à travers une paroi du cadre de support 1. Les moyens de fixation 8 par encliquetage, intégrés dans le dispositif d'étanchéité 3 coopèrent avec les éléments complémentaires de fixation par encliquetage 9, intégrés dans le cadre de support 1, et plus particulièrement dans le logement 10 ou dans des rainures 11 encadrant ce logement 10.

Pour chaque paire formée par un moyen de fixation par encliquetage 8 et un élément complémentaire de fixation 9, destinés à coopérer ensemble, l'un consiste en un élément mâle formant saillie, tandis que l'autre consiste en un élément femelle de forme correspondante à celle de la saillie, par exemple une fente.

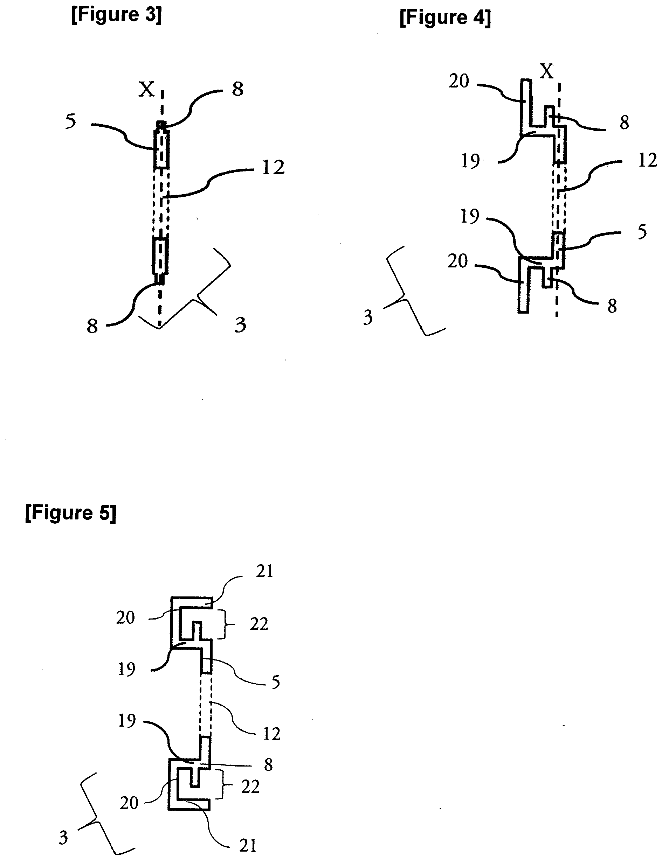

La [Figure 3] présente un premier mode de réalisation du dispositif d'étanchéité 3, qui consiste notamment en une plaque 5 s'étendant, lorsque le dispositif d'étanchéité est monté dans le logement autour de la tubulure appropriée, dans un plan défini par l'axe longitudinal et par l'axe latéral, parallèlement au plan d'allongement principal de la paroi latérale du cadre dans laquelle le logement du dispositif d'étanchéité est réalisé

La plaque 5 présente un évidement central 12, apte à laisser passage à la tubulure 17 de l'échangeur, et elle participe à former ou bien supporter un moyen d'étanchéité déformable élastiquement 13 dimensionné pour être en prise autour de la tubulure et rendre hermétique cette zone de passage 26.

La plaque 5 est par ailleurs équipée d'au moins deux moyens de fixation 8 par encliquetage faisant saillie de la plaque 5, disposés sur des bords d'extrémité opposés de la plaque 5 et situés dans le plan principal d'allongement X de ladite plaque 5. Ces moyens de fixation 8 par encliquetage en saillie s'étendent sur une dimension inférieure à celle de la plaque 5 et sont configurés pour coopérer avec des éléments complémentaires de fixation 9 par encliquetage, formant tel que cela sera détaillé ci-après des fentes, situés dans le cadre de support 1, plus précisément dans le logement 10.

Alternativement, on pourra inverser la disposition des éléments mâles et femelles formant les moyens de fixation par encliquetage, et on pourra prévoir une plaque 5 équipée de fentes tandis que le cadre de support 1 contient des saillies de forme et de dimensions complémentaires.

Dans une variante non illustrée, on pourrait prévoir que les moyens de fixation 8 par encliquetage de ce premier mode de réalisation pourront être agencées à 90° par rapport à la configuration illustrée et s'étendre depuis un bord d'extrémité de la plaque, sensiblement perpendiculaire au plan d'allongement principal X de la plaque. Là encore, les moyens de fixation 8 s'étendent sur une dimension inférieure à la longueur de la plaque.

Les [Figure 4] et [Figure 5] illustrent des modes de réalisation alternatifs du dispositif d'étanchéité.

Dans un deuxième mode de réalisation, représenté schématiquement à la [Figure 4], le dispositif d'étanchéité 3 adopte un agencement plus complexe : le dispositif d'étanchéité comprend une plaque 5, encadrée par une zone périphérique 20, laquelle est décalée axialement de manière à former une plate-forme disposée dans un plan distinct parallèle au plan X défini par la plaque 5. La plaque 5 et la zone périphérique 20 sont reliées par des parois latérales 19 s'étendant dans un plan orthogonal à celui de la plaque 5.

Le dispositif d'étanchéité 3 comprend au moins deux moyens de fixation 8 par encliquetage, chacun étant disposé sur une paroi latérale 19. Tel qu'illustré, ces moyens de fixation peuvent plus particulièrement être disposée sur une face externe de cette paroi latérale, c'est-à-dire une face de la paroi latérale orientée vers l'extérieur de la pièce ou, en d'autres termes, orientée à l'opposé de la plaque 5. De la sorte, les moyens de fixation 8 par encliquetage ne génèrent pas d'encombrement au niveau de l'évidement central 12 ou de la plaque 5, et donc du passage de la tubulure 17.

Les moyens de fixation 8 selon la présente configuration s'étendent dans un plan parallèle au plan X de la plaque 5, sur une longueur inférieure à la longueur du bord latéral de ladite plaque 5. Tels qu'illustrés, les moyens de fixation 8 par encliquetage intégrés dans le dispositif d'étanchéité 3 adoptent la forme de saillies, et forment donc l'élément mâle de la fixation par encliquetage. Ils sont ainsi configurés pour coopérer avec des éléments complémentaires de fixation 9 par encliquetage intégrés dans le cadre de support 1, et plus particulièrement dans le logement 10, prenant la forme de fentes. Tel que cela a été précisé précédemment, la configuration inverse est néanmoins envisageable, de sorte que le dispositif d'étanchéité 3 comprenne les moyens de fixation 8 par encliquetage formant des fentes, et que le cadre de support 1 intègre les moyens de fixation en saillie.

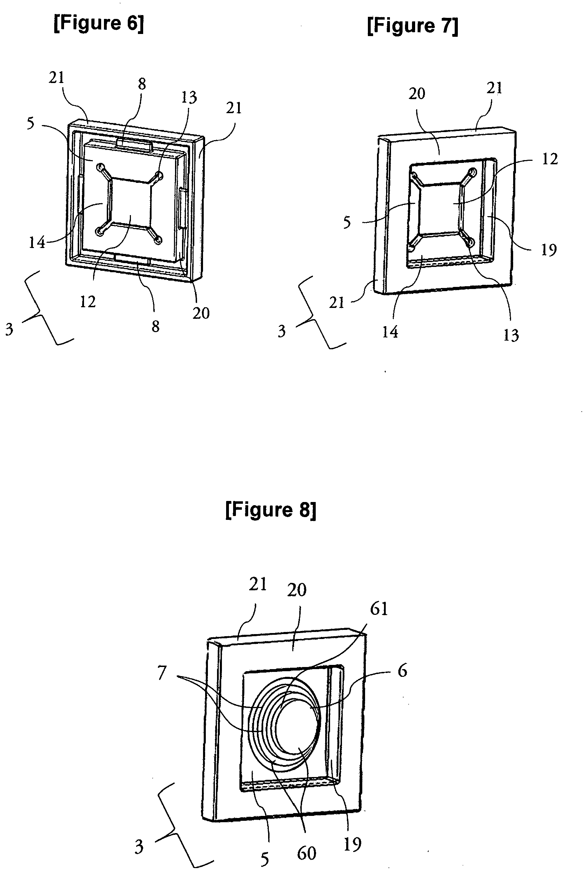

Selon un troisième mode de réalisation, présenté notamment à la [Figure 5], la [Figure 6], la [Figure 7] et la [Figure 8], chaque extrémité distale de la zone périphérique 20 est équipée d'un pan de matière, orthogonal au plan de ladite zone, formant une paroi de renvoi 21. On comprend que l'extrémité distale de la zone périphérique est l'extrémité disposée à l'opposé de la paroi latérale qu'elle prolonge perpendiculairement. L'ensemble comprenant les parois de renvoi 21, la zone périphérique 20 et les parois latérales 19 forme une zone de dégagement 22, comparable à une gouttière dans laquelle sont agencés les différents moyens de fixation 8 par encliquetage, de manière à renforcer l'étanchéité du dispositif d'étanchéité 3 au niveau de ses moyens de fixation 8.

Pour ce troisième mode de réalisation, les moyens de fixation pourront à nouveau adopter différentes configurations. Selon une première configuration, représentée sur la [Figure 5] et la [Figure 6], les moyens de fixation 8 par encliquetage sont disposés au niveau des parois latérales 19 de manière à s'étendre dans un plan parallèle au plan X défini par la plaque 5, et à être hébergés au sein de la gouttière formée par la zone de dégagement 22.

Selon une configuration alternative, les moyens de fixation 8 par encliquetage conservent leurs caractéristiques, mais sont cette fois disposés respectivement sur une paroi de renvoi 21, depuis une face interne de celle-ci en s'étendant en sens inverse à ce qui est illustré sur la [Figure 5], de manière à être là encore hébergés au sein de la zone de dégagement 22 et à s'étendre vers la plaque 5.

Alternativement, les moyens de fixation 8 par encliquetage du dispositif d'étanchéité 3 peuvent former saillie des faces externes des parois de renvoi de sorte qu'ils ne sont pas hébergés par la zone de dégagement 22 et qu'ils s'étendent dans un plan parallèle au plan X défini par la plaque 5 en s'éloignant de ladite plaque 5.

Tel que cela a déjà été mentionné, pour chacune des configurations décrites pour ce troisième mode de réalisation, les moyens de fixation 8 par encliquetage, intégrés dans le dispositif d'étanchéité, pourront adopter la forme mâle d'une saillie ou femelle d'une fente tandis que l'élément complémentaire de fixation par encliquetage 9 adoptera la forme opposée.

Dans tout ce qui précède et suit, il convient de noter que le terme de fente s'entend aussi bien pour des trous borgnes comportant une paroi de fond contre laquelle ou en regard de laquelle vient la saillie que pour des trous traversant la paroi dans laquelle ces fentes sont formées.

Lorsque le dispositif d'étanchéité 3 comprend, conformément à ce troisième mode de réalisation, de telles parois de renvoi 21, le logement 10 de forme complémentaire présente une forme particulière, notamment visible sur la [Figure 9].

Le logement 10 est encadré par au moins deux rainures 11, aptes à accueillir les parois de renvoi 21, qui seront abordées plus en détail par la suite. Ainsi la plaque 5 du dispositif d'étanchéité 3 coopère avec le logement 10, tandis que les parois de renvoi 21 coopèrent avec les rainures 11.

Les parois de renvoi 21 contribuent ainsi au verrouillage du dispositif d'étanchéité 3 en faisant butée contre des rainures 11 les accueillant, de manière à prévenir tout mouvement, dans le plan X défini par la plaque 5, au sein du logement 10.

Les [Figure 10] et [Figure 11] illustrent la collaboration entre le dispositif d'étanchéité 3, lorsqu'il est réalisé selon le troisième mode de réalisation, et le logement 10 qui lui est associé.

L'agencement particulier dudit logement 10 est davantage apparent sur la [Figure 9], en l'absence du dispositif d'étanchéité 3. Le logement 10 présenté adopte la forme d'une fenêtre, formée dans une paroi latérale 102 du cadre de support 1, entourant une cavité agencée de manière à laisser passage à une tubulure 17 lorsque l'échangeur de chaleur 4 est inséré dans le cadre de support 1. Dans la suite, les différentes faces de cette fenêtre porteront le nom de « côtés du logement » 10. La cavité, qui forme une zone de passage 26 tel que cela a été évoqué précédemment, permet ainsi d'une part le passage d'une tubulure et d'autre part l'intégration du dispositif d'étanchéité 3.

Quel que soit le mode de réalisation considéré, le logement 10 est agencé de manière à adopter une forme complémentaire à celle du dispositif d'étanchéité 3. Plus particulièrement, les côtés du logement 10 doivent être aptes à coopérer avec la forme de la plaque 5 de sorte que, lorsque le dispositif d'étanchéité 3 est inséré dans le logement 10, les côtés dudit logement 10 encadrent la plaque 5. Pour les modes de réalisations plus complexes, tels que le deuxième ou le troisième mode de réalisation, comprenant des parois latérales 19, les côtés du logement 10 sont en contact avec les parois latérales 19.

Selon les configurations adoptées pour les moyens de fixation 8 par encliquetage du dispositif d'étanchéité 3, les éléments complémentaires de fixation 9 sont intégrés au niveau des côtés du logement 10. C'est par exemple le cas pour toute configuration dans laquelle les moyens de fixation 8 par encliquetage sont intégrés au niveau des parois latérales 19.

Dans le cas du troisième mode de réalisation du dispositif d'étanchéité 3, le dispositif d'étanchéité 3 comprend des parois de renvoi 21. Afin de pouvoir loger ces parois de renvoi dans le volume défini par le cadre de support 1, le logement 10 est encadré, sur au moins deux côtés, par des rainures 11 de forme complémentaire à la forme desdites parois de renvoi 21. Ces rainures 11 forment ainsi un rail d'accueil pour les parois de renvoi 21, en s'étendent parallèlement au logement 10 sur une longueur supérieure à la longueur du logement, de manière à pouvoir l'encadrer.

Dans le cas illustré sur la [Figure 10], le logement 10 est fermé par quatre côtés du logement et il est intégralement entouré par des rainures 11 qui définissent un pourtour fermé.

Selon une alternative, visible à la [Figure 11], le logement 10 est réalisé par une encoche formée dans une paroi du cadre de support, ici une paroi latérale 102, depuis la face d'extrémité frontale 24. Le logement présente là encore une forme et des dimensions complémentaires à celles du dispositif d'étanchéité 3, plus particulièrement à celle de la plaque 5. En d'autres termes, le logement 10 est ouvert sur au moins un côté, de telle sorte qu'il débouche sur la face d'extrémité frontale 24 du cadre de support 1. Tel que cela sera décrit ci-après, le logement est ainsi destiné à être fermé, une fois le dispositif d'étanchéité inséré, par le placage du conduit de ventilation 2 sur le cadre de support 1 lorsque le système est en configuration fermée.

Dans une telle alternative, les rainures 11 sont elles aussi ouvertes sur au moins un côté. Plus particulièrement, les rainures sont ouvertes à une extrémité longitudinale de manière à déboucher sur la face d'extrémité frontale 24 de la paroi du cadre de support. Tel qu'illustré, les rainures 11 sont disposées de part et d'autre du logement 10 et elles débouchent sur la même face que l'ouverture du logement.

Les rainures s'étendent ainsi depuis l'extrémité de la paroi latérale du cadre de support 1 jusqu'à dépasser la périphérie du logement 10. Un bord latéral 16 du dispositif d'étanchéité, situé au niveau du côté ouvert du logement 10, est agencé dans la continuité de la face d'extrémité frontale 24 de la paroi du cadre de support 1, lorsque le dispositif d'étanchéité 3 est assemblé dans le logement 10. Le bord latéral 16 du dispositif d'étanchéité forme ainsi une zone de contact avec le conduit de ventilation 2, et plus particulièrement la face d'extrémité arrière de ce conduit de ventilation 2, lorsque le module de face avant est en configuration fermée et que le conduit de ventilation est fixé au cadre de support 1. De la sorte, lorsque le conduit de ventilation 2 est fixé sur le cadre de support 1, formant ainsi un boitier d'encapsulage, la face arrière du conduit de ventilation 2 est en contact continu avec l'ensemble cadre de support 1 - dispositif d'étanchéité 3, assurant ainsi d'une part l'étanchéité du boitier, et d'autre part le verrouillage du dispositif d'étanchéité 3 dans son logement 10.

Tel que décrit précédemment, la plaque 5 participe à former ou à supporter un moyen d'étanchéité, déformable élastiquement, agencé au niveau de l'évidement central 12 de la plaque 5. Ce moyen d'étanchéité, permettant d'assurer l'étanchéité du boitier d'encapsulage au niveau de la zone de passage de la tubulure 17 de l'échangeur de chaleur 4, va être décrit par la suite en se référant à différents modes de réalisation. Il sera compris que des combinaisons autres que celles illustrées à titre d'exemple pourront être mises en oeuvre dans le contexte de l'invention, avec des dispositifs d'étanchéité qui comportent l'un ou l'autre des moyens de fixation par encliquetage précédemment décrits et l'un ou l'autre des moyens d'étanchéité élastiquement déformables qui vont être décrits par la suite.

Dans un premier mode de réalisation, représenté schématiquement à la [Figure 8], le moyen d'étanchéité déformable élastiquement comprend une gaine d'étanchéité 6 souple, surmoulée sur la plaque 5 autour de l'évidement 12 de sa zone centrale. Ladite gaine d'étanchéité 6 est pourvue d'une pluralité de zones de prédécoupe 7, chaque zone de prédécoupe 7 correspondant à un calibre de tubulure différent. Cette caractéristique particulière permet de faciliter l'assemblage du dispositif d'étanchéité sur les tubulures 17 de l'échangeur de chaleur 4, et de pouvoir utiliser une pièce d'étanchéité standard pour plusieurs dimensions de tubulures.

La réalisation du moyen d'étanchéité déformable élastiquement sous forme de gaine souple, pourvue de zones de prédécoupe, rend possible soit de réaliser une perforation de la gaine d'étanchéité au diamètre désiré au préalable de l'insertion de la tubulure 17, soit de réaliser une perforation de la gaine d'étanchéité directement par une déchirure de la zone de prédécoupe résultant de la contrainte physique exercée par la tubulure sur la gaine d'étanchéité non perforée.

Dans l'exemple illustré, les différentes zones de prédécoupe sont formées par l'agencement de la gaine d'étanchéité souple 6 avec un diamètre décroissant au fur et à mesure de son éloignement de la plaque et par la disposition de zones fragiles le long de la gaine souple, chaque emplacement de zone fragile correspondant à la découpe de la gaine pour correspondre à une tubulure de diamètres donné. Plus particulièrement, la gaine d'étanchéité pourra présenter une série de plateaux 60 dont les diamètres sont décroissants au fur et à mesure de leur éloignement de la plaque, avec chaque plateau, sensiblement parallèle au plan défini par la plaque, qui est relié à un plateau voisin par un anneau de liaison 61 sensiblement perpendiculaire au(x) plateau(x). La jonction d'un tel anneau de liaison avec un plateau 60 forme un angle droit facilitant l'arrachage du plateau de dimension correspondantes à celles de la tubulure que l'on souhaite insérer.

Dans un tel mode de réalisation, au moins la gaine d'étanchéité 6 devra être dans un matériau souple, tel que de l'EPDM. Dans une alternative, la plaque 5 et les moyens de fixation 8 par encliquetage seront constitués d'un matériau plus rigide, apte à résister à davantage de contraintes, tel que du polyamide PA66, le cas échéant chargé en fibre de verres, alors que la gaine d'étanchéité, surmoulée sur la plaque autour de l'évidement central 12, sera en EPDM.

La souplesse du matériau formant la gaine d'étanchéité permet de se déformer au passage de la tubulure, le caractère élastique de ce matériau participant à plaquer la gaine autour de la tubulure lors de son passage pour rendre hermétique la zone de passage. Le rappel élastique en position du matériau formant la gaine d'étanchéité peut permettre en outre de coopérer avec un moyen de butée anti-dégagement formé sur la tubulure.

Dans un second mode de réalisation, présenté à la [Figure 6] et la [Figure 7] par exemple, la plaque 5 participe à former dans son plan d'allongement le moyen d'étanchéité déformable élastiquement. Celui-ci est formé d'un seul tenant sur la plaque 5, par au moins deux encoches 13 s'étendant de l'évidement central 12 vers les bords de la plaque 5. Ces encoches 13 permettent de former des languettes déformables 14, chacune de forme sensiblement trapézoïdale, sur tout le contour de la zone d'évidement 12, rendant ainsi le dispositif d'étanchéité 3 apte à accueillir des tubulures 17 de diamètre variable. Lorsqu'une tubulure 17 vient à être insérée dans un tel dispositif d'étanchéité, les languettes déformables 14 sont pliées au passage de la tubulure et le rappel élastique en position dû à leur caractère élastique permet à ces languettes de venir se plaquer contre la tubulure 17 de manière à assurer l'étanchéité du système.

Un tel mode de réalisation a, de plus, pour avantage de simplifier au maximum l'assemblage du module de face avant puisqu'il ne nécessite pas de réaliser, en vue de l'insertion de la tubulure, d'opération préalable de découpe du dispositif d'étanchéité à un diamètre spécifique. Dans un tel mode de réalisation, le dispositif d'étanchéité 3 peut être mono matière et fait d'un matériau permettant la déformation élastique des languettes au moment de l'insertion de la tubulure, tel qu'un caoutchouc de type EPDM.

On va à présent décrire un procédé d'assemblage du système d'échange thermique comprenant un dispositif d'étanchéité tel qu'exposé précédemment, plus particulièrement selon le troisième mode de réalisation, tel qu'illustré aux [Figure 7] ou [Figure 8]. Dans une première étape, l'échangeur de chaleur 4 est inséré dans le cadre de support 1, de sorte que ses tubulures entrantes 17a et sortantes 17b traversent la paroi du cadre de support 1 au niveau des logements 10 destinés à héberger les dispositifs d'étanchéité 3. Par la suite, le dispositif d'étanchéité 3 est inséré dans le système par coulissement le long de l'axe longitudinal défini par la tubulure, jusqu'à ce qu'il soit inséré dans le logement 10, ou plus précisément, dans le cas d'un dispositif d'étanchéité selon le troisième mode de réalisation, jusqu'à ce que les parois de renvoi 21 soient insérées dans les rainures 11 et que la plaque 5 soit encadrée par le logement 10, et enfin que les moyens de fixation 8 par encliquetage du dispositif d'étanchéité 3 coopèrent avec les éléments complémentaires de fixation 9 du logement 10.

Dans le cas d'un dispositif d'étanchéité 3 dont le moyen d'étanchéité est une gaine d'étanchéité 6, le dispositif d'étanchéité 3 peut être directement inséré sur la tubulure 17, de sorte que la contrainte exercée par ladite tubulure 17 perfore la gaine d'étanchéité 6 par déchirure. Alternativement, la gaine d'étanchéité 6 peut, au préalable, être découpée au diamètre désiré, une telle étape étant facultative.

Enfin le conduit de ventilation 2 est fixé sur le cadre de support 1, de manière à fermer le module de face avant.

Le module de face avant 100 selon l'invention peut comprendre en outre un dispositif d'obturation comprenant un ensemble de volets d'obturation aptes à pivoter en rotation de manière à faire varier le débit du flux d'air, ledit dispositif d'obturation est agencé dans le conduit de ventilation 2 en amont de l'échangeur de chaleur 4 par rapport à l'écoulement du flux d'air. Le dispositif d'obturation comprend en outre un cadre support présentant des paliers de manière à porter les volets d'obturation. Les axes de rotation permettent aux volets d'obturation de passer d'une configuration d'ouverture à une configuration de fermeture. La configuration d'ouverture, revient à placer (par rotation) les volets d'obturation de manière à ce qu'ils s'opposent le moins possible au passage du flux d'air tout en l'orientant de manière appropriée. La configuration de fermeture, revient à placer les volets d'obturation de manière à ce qu'ils s'opposent par leur surface frontale au maximum à l'écoulement du flux d'air F, en coopération avec les autres volets d'obturation.

Selon un mode de réalisation non illustré du module de face avant 100, l'échangeur de chaleur 4 et le cadre de support 1 peuvent être incliné par rapport au dispositif d'obturation. En d'autres termes, les plans médians du cadre de support 1 et du dispositif d'obturation forment un angle différent de 0° (non nul), en particulier un angle compris dans un écart entre 10 et 80°, plus précisément dans un écart entre 30° et 60°. Un tel agencement permet de diminuer l'encombrement stérique du module de face avant 100.

On comprend à la lecture de ce qui précède que la présente invention propose un dispositif d'étanchéité, destiné à un échangeur de chaleur, ce dispositif d'étanchéité étant configuré pour assurer l'étanchéité d'un module de face avant tout en facilitant son assemblage et son désassemblage. La présence de moyens de fixation par encliquetage contribue à une insertion facilitée dudit dispositif, tout en facilitant l'assemblage du module de face avant, tandis que les moyens d'étanchéité présentés assurent à la fois une étanchéité optimale du système et une standardisation du dispositif d'étanchéité.

## Revendications

1. Dispositif d'étanchéité (3) pour échangeur de chaleur (4) de véhicule automobile consistant en une plaque (5) comprenant un évidement central (12) configuré pour laisser passage à une tubulure (17) de l'échangeur de chaleur, **caractérisé en ce qu'**au moins deux bords d'extrémité opposés de ladite plaque (5) sont équipés respectivement d'un moyen de fixation (8) par encliquetage, apte chacun à coopérer avec des éléments complémentaires de fixation (9) par encliquetage intégrés dans un logement (10) situé dans un cadre de support (1) de l'échangeur de chaleur (4), et **caractérisé en ce que** le dispositif d'étanchéité (3) comporte un moyen d'étanchéité déformable élastiquement (6, 14) agencé autour de l'évidement central (12) formé dans la plaque (5).

2. Dispositif d'étanchéité (3) selon la revendication 1, dans lequel les moyens de fixation (8) par encliquetage sont disposés respectivement sur une paroi agencée au voisinage d'un bord d'extrémité et qui est sensiblement perpendiculaire au plan dans lequel s'étendent la plaque (5) et l'évidement central, les moyens de fixation (8) par encliquetage s'étendant, selon un plan parallèle au plan dans lequel s'étendent la plaque (5) et l'évidement central, sur une longueur inférieure à la longueur du bord d'extrémité correspondant de ladite plaque (5).

3. Dispositif d'étanchéité (3) selon l'une quelconque des revendications précédentes, dans lequel la plaque (5) est encadrée par une zone périphérique (20) décalée axialement et formant une plate-forme, la plaque (5) et la zone périphérique (20) étant reliées par des parois latérales (19).

4. Dispositif d'étanchéité (3) selon la revendication précédente, dans lequel la zone périphérique (20) s'étend dans un plan parallèle au plan dans lequel s'étend la plaque (5) et l'évidement central (12), et dans lequel l'extrémité de la zone périphérique (20) opposée aux parois latérales (19) est équipée d'un pan de matière, orthogonal au plan de ladite zone périphérique, formant une paroi de renvoi (21) agencée de manière telle que les parois de renvoi (21), la zone périphérique (20) et les parois latérales (19) forment une zone de dégagement (22) hébergeant les moyens de fixation par encliquetage (8).

5. Dispositif d'étanchéité (3) selon les revendications 3 ou 4, dans lequel les moyens de fixation (8) par encliquetage sont disposés au niveau des parois latérales (19).

6. Dispositif d'étanchéité (3) selon la revendication 4, dans lequel les moyens de fixation (8) par encliquetage sont disposés au niveau des parois de renvoi (21).

7. Module de face avant (100) pour véhicule automobile comprenant au moins un échangeur de chaleur (4) muni d'une ou plusieurs tubulures (17a, 17b), un cadre de support (1) configuré pour permettre la fixation de l'échangeur de chaleur (4), un conduit de ventilation (2) configuré pour coopérer avec une face d'extrémité frontale (24) dudit cadre de support (1) et configuré pour guider de l'air vers l'échangeur de chaleur, et au moins un dispositif d'étanchéité selon l'une quelconque des revendications 1 à 6, le module de face avant (100) comprenant en outre un logement (10) formé dans une paroi du cadre de support au niveau des zones de passage de la tubulure (17a) d'entrée ou de sortie (17b) de fluide de l'échangeur de chaleur, ledit logement présentant une forme et des dimensions au moins en partie complémentaires à celles du dispositif d'étanchéité, le logement (10) étant équipé d'éléments complémentaires de fixation (9) par encliquetage aptes à coopérer avec les moyens de fixation (8) par encliquetage présents dans le dispositif d'étanchéité.

8. Module de face avant pour véhicule automobile selon la revendication précédente dans lequel le logement de forme complémentaire (10) est fermé sur l'ensemble de ses côtés, de manière telle qu'aucun des côtés du dispositif d'étanchéité (3) n'est en contact avec le conduit de ventilation (2) lorsque celui-ci est fixé au cadre de support (1).

9. Module de face avant selon la revendication 7 ou 8, dans lequel le dispositif d'étanchéité est conforme à la revendication 4, le logement étant encadré par au moins deux rainures (11), aptes à accueillir les parois de renvoi (21) du dispositif d'étanchéité (3), lesdites rainures (11) s'étendant parallèlement au logement (10) sur une longueur supérieure à la longueur du logement (10).

10. Procédé d'assemblage d'un module de face avant (100) pour véhicule automobile équipé d'un dispositif d'étanchéité (3) selon l'une quelconque des revendications 1 à 6, le procédé comprenant une première étape d'introduction de l'échangeur de chaleur (4) dans le cadre de support (1), une deuxième étape de fixation du dispositif d'étanchéité, par insertion sur la tubulure (17) de l'échangeur de chaleur (4) jusqu'à ce que le dispositif d'étanchéité (3) soit placé dans le logement complémentaire (10) et une troisième étape de verrouillage du module de face avant (100) par fixation du conduit de ventilation (2) sur le cadre de support (1). ;

## Patentansprüche

1. Dichtungsvorrichtung (3) für einen Wärmetauscher (4) eines Kraftfahrzeugs, bestehend aus einer Platte (5), die eine zentrale Aussparung (12) umfasst, die dazu ausgelegt ist, einen Durchgang für einen Stutzen (17) des Wärmetauschers freizuhalten, **dadurch gekennzeichnet, dass** mindestens zwei gegenüberliegende Endkanten der Platte (5) jeweils mit einem Einrastbefestigungselement (8) ausgestattet sind, die jeweils dazu geeignet sind, mit komplementären Einrastbefestigungselementen (9) zusammenwirken, die in eine Aufnahme (10) integriert sind, die sich in einem Tragrahmen (1) des Wärmetauschers (4) befindet, und **dadurch gekennzeichnet, dass** die Dichtungsvorrichtung (3) ein elastisch verformbares Dichtungsmittel (6, 14) aufweist, das um die in der Platte (5) ausgebildete zentrale Aussparung (12) herum angeordnet ist.

2. Dichtungsvorrichtung (3) nach Anspruch 1, wobei die Einrastbefestigungsmittel (8) jeweils an einer Wand angeordnet sind, die in der Nähe einer Endkante angeordnet und im Wesentlichen senkrecht zu der Ebene ist, in der sich die Platte (5) und die zentrale Aussparung erstrecken, wobei sich die Einrastbefestigungsmittel (8) in einer Ebene parallel zu der Ebene, in der sich die Platte (5) und die zentrale Aussparung erstrecken, über eine Länge erstrecken, die kleiner als die Länge der entsprechenden Endkante der Platte (5) ist.

3. Dichtungsvorrichtung (3) nach einem der vorangehenden Ansprüche, wobei die Platte (5) von einem Umfangsbereich (20) umrahmt ist, der axial versetzt ist und eine Plattform bildet, wobei die Platte (5) und der Umfangsbereich (20) durch Seitenwände (19) miteinander verbunden sind.

4. Dichtungsvorrichtung (3) nach dem vorangehenden Anspruch, wobei sich der Umfangsbereich (20) in einer Ebene erstreckt, die zur Ebene, in der sich die Platte (5) und die zentrale Aussparung (12) erstrecken, parallel ist, und wobei das den Seitenwänden (19) gegenüberliegende Ende des Umfangsbereichs (20), mit einer Materialfläche versehen ist, die zur Ebene des Umfangsbereichs senkrecht ist und eine Umlenkwand (21) bildet, die so angeordnet ist, dass die Umlenkwände (21), der Umfangsbereich (20) und die Seitenwände (19) einen Freiraumbereich (22) bilden, der die Einrastbefestigungsmittel (8) aufnimmt.

5. Dichtungsvorrichtung (3) nach Anspruch 3 oder 4, wobei die Einrastbefestigungsmittel (8) an den Seitenwänden (19) angeordnet sind.

6. Dichtungsvorrichtung (3) nach Anspruch 4, wobei die Einrastbefestigungsmittel (8) an den Umlenkwänden (21) angeordnet sind.

7. Frontmodul (100) für ein Kraftfahrzeug, umfassend mindestens einen Wärmetauscher (4), der mit einem oder mehreren Stutzen (17a, 17b), einem Tragrahmen (1), der dazu ausgelegt ist, die Befestigung Wärmetauschers (4) zu ermöglichen, einem Lüftungskanal (2), der dazu ausgelegt ist, mit einer vorderen Endfläche (24) des Tragrahmens (1) zusammenzuwirken, und dazu ausgelegt ist, Luft zum Wärmetauscher zu leiten, und mindestens einer Dichtungsvorrichtung nach einem der Ansprüche 1 bis 6 ausgestattet ist, wobei das Frontmodul (100) ferner eine Aufnahme (10) umfasst, die in einer Wand des Tragrahmens an den Durchgangsbereichen des Einlass- (17a) bzw. Auslassstutzens (17b) für Fluid des Wärmetauschers ausgebildet ist, wobei die Aufnahme eine Form und Abmessungen aufweist, die zumindest teilweise komplementär zu denen der Dichtungsvorrichtung sind, wobei die Aufnahme (10) mit komplementären Einrastbefestigungsmitteln (9) ausgestattet ist, die dazu geeignet sind, mit den in der Dichtungsvorrichtung vorhandenen Einrastbefestigungsmitteln (8) zusammenzuwirken.

8. Kraftfahrzeug-Frontmodul nach dem vorangehenden Anspruch, wobei die komplementär geformte Aufnahme (10) über alle ihre Seiten geschlossen ist, so dass keine der Seiten der Dichtungsvorrichtung (3) mit dem Lüftungskanal (2) in Kontakt kommt, wenn dieser am Tragrahmen (1) befestigt ist.

9. Frontmodul nach Anspruch 7 oder 8, wobei die Dichtungsvorrichtung dem Anspruch 4 entspricht, wobei die Aufnahme durch mindestens zwei Nuten (11) eingerahmt ist, die dazu geeignet sind, die Umlenkwände (21) der Dichtungsvorrichtung (3) aufzunehmen, wobei sich die Nuten (11) parallel zur Aufnahme (10) über eine Länge erstrecken, die größer als die Länge der Aufnahme (10) ist.

10. Verfahren zur Montage eines Fronmoduls (100) für ein Kraftfahrzeug, das mit einer Dichtungsvorrichtung (3) nach einem der Ansprüche 1 bis 6 ausgestattet ist, wobei das Verfahren einen ersten Schritt des Einsetzens des Wärmetauschers (4) in den Tragrahmen (1), einen zweiten Schritt des Befestigens der Dichtungsvorrichtung durch Einsetzen auf den Stutzen (17) des Wärmetauschers (4), bis die Dichtungsvorrichtung (3) in der komplementären Aufnahme (10) platziert ist, und einen dritten Schritt des Verriegelns des Frontmoduls (100) durch Befestigen des Lüftungskanals (2) am Tragrahmen (1) umfasst.

## Claims

1. Sealing device (3) for a motor vehicle heat exchanger (4) consisting of a plate (5) comprising a central recess (12) configured to allow a heat exchanger pipe (17) to pass through **characterized in that** at least two opposite end edges of said plate (5) are each equipped with a snap-fastening means (8), each able to interact with complementary snap-fastening elements (9) integrated in a housing (10) located in a support frame (1) of the heat exchanger (4), and **characterized in that** the sealing device (3) comprises an elastically deformable sealing means (6, 14), arranged around the central recess (12) formed in the plate (5).

2. Sealing device (3) according to Claim 1, wherein the snap-fastening means (8) are each positioned on a wall arranged in the vicinity of an end edge, substantially perpendicular to the plane in which the plate (5) and the central recess extend, the snap-fastening means (8) extending, in a plane parallel to the plane in which the plate (5) and the central recess extend, over a length less than the length of the corresponding end edge of said plate (5).

3. Sealing device (3) according to any one of the preceding claims, wherein the plate (5) is surrounded by a peripheral zone (20) offset axially and forming a platform, the plate (5) and the peripheral zone (20) being connected by side walls (19).

4. Sealing device (3) according to the preceding claim, wherein the peripheral zone (20) extends in a plane parallel to the plane in which the plate (5) and the central recess (12) extend, and in which the end of the peripheral zone (20) opposite the side walls (19) is equipped with a section of material, orthogonal to the plane of said peripheral zone, forming a return wall (21) arranged in such a way that the return walls (21), the peripheral zone (20) and the side walls (19) form a clearance zone (22) housing the snap-fastening means (8).

5. Sealing device (3) according to Claim 3 or 4, wherein the snap-fastening means (8) are arranged on the side walls (19).

6. Sealing device (3) according to Claim 4, wherein the snap-fastening means (8) are arranged on the return walls (21) .

7. Front end module (100) for a motor vehicle comprising at least one heat exchanger (4) provided with one or more pipes (17a, 17b), a support frame (1) configured to allow attachment of the heat exchanger (4), a ventilation duct (2) configured to interact with a front end face (24) of said support frame (1) and configured to guide air toward the heat exchanger, and at least one sealing device according to any one of Claims 1 to 6, the front end module (100) further comprising a housing (10) formed in a wall of the support frame in the passage areas where the heat exchanger fluid inlet (17a) or outlet (17b) pipe passes through, said housing having a shape and dimensions at least partially complementary to those of the sealing device, the housing (10) being equipped with complementary snap-fastening elements (9) able to interact with the snap-fastening means (8) present in the sealing device.

8. Front end module for a motor vehicle according to the preceding claim wherein the housing (10) of complementary shape is closed on all of its sides, such that none of the sides of the sealing device (3) is in contact with the ventilation duct (2) when the latter is attached to the support frame (1).

9. Front end module according to Claim 7 or 8, wherein the sealing device is in accordance with Claim 4, the housing being surrounded by at least two grooves (11), able to accommodate the return walls (21) of the sealing device (3), said grooves (11) extending parallel to the housing (10) over a length greater than the length of the housing (10).

10. Method for assembling a front end module (100) for a motor vehicle equipped with a sealing device (3) according to any one of Claims 1 to 6, the method comprising a first step of placing the heat exchanger (4) in the support frame (1), a second step of fastening the sealing device, by insertion on the pipe (17) of the heat exchanger (4) until the sealing device (3) is placed in the complementary housing (10) and a third step of locking the front end module (100) by attaching the ventilation duct (2) to the support frame (1).
